# EUROPEAN PATENT SPECIFICATION

(11) **EP 2 921 659 B1**
(45) Date of publication and mention of the grant of the patent: **29.03.2017**
(21) Application number: 13862912.6
(22) Date of filing: 12.07.2013
(51) Int. Cl.: F01K 23/10, F01N 5/02, F01N 5/04, F02G 5/02, F01K 23/06, F02B 41/10

(54) **EXHAUST-HEAT RECOVERY SYSTEM AND EXHAUST-HEAT RECOVERY METHOD**
ABGASWÄRMERÜCKGEWINNUNGSSYSTEM UND ABGASWÄRMERÜCKGEWINNUNGSVERFAHREN
SYSTÈME DE RÉCUPÉRATION DE CHALEUR D'ÉCHAPPEMENT ET PROCÉDÉ DE RÉCUPÉRATION DE CHALEUR D'ÉCHAPPEMENT

(30) Priority: 14.12.2012 JP 2012273877
(43) Date of publication of application: 23.09.2015
(73) Proprietor: Mitsubishi Heavy Industries, Ltd., Tokyo 108-8215 (JP)
(72) Inventor: ICHIKI, Yoshihiro, Tokyo 108-8215 (JP)
(74) Representative: Hoffmann Eitle
(86) International application number: PCT/JP2013/069118
(87) International publication number: WO 2014/091786

(56) References cited:
- EP-A1- 2 410 151
- EP-A1- 2 484 873
- EP-A1- 2 492 458
- JP-A- S62 607
- JP-A- 2011 007 094
- JP-A- 2011 148 399
- JP-A- 2012 047 094
- JP-A- 2012 047 094

## Description

### {Technical Field}

The present invention relates to an exhaust-heat recovery system and an exhaust-heat recovery method.

### {Background Art}

An exhaust-heat recovery system is installed in ships in some cases, and the exhaust-heat recovery system includes a main engine, such as a diesel engine, a power turbine (gas turbine), a steam turbine, and an exhaust gas economizer. The power turbine and the steam turbine are driven by using, as a power source, exhaust energy of exhaust gas (combustion gas) discharged from the main engine, and a generator connected to the power turbine and the steam turbine generates power.

PTL 1 discloses a technology, for use in an exhaust-heat recovery system, relating to a turbine-generator control method and apparatus that are capable of reducing generation power without wastefully consuming diesel engine fuel when demand power is reduced, and generation power becomes excessive. PTL 2 discloses a marine denitration system including an ammonia producing device including a hydrogen producing unit for producing hydrogen from water and a hydrogen producing unit for producing hydrogen from air, and producing ammonia from the hydrogen and nitrogen, and a SCR catalyst unit provided in an exhaust gas passage of a main engine for marine vessel propulsion and performs denitration of the exhaust gas with the ammonia produced by the ammonia producing device.
Further, PTL 3 discloses an exhaust gas energy recovery device able to continuously maintain the optimal engine operation condition in a manner that the flow rate of the exhaust gas set to the power turbine is regulated so that the scavenging air pressure becomes optimal in order that the engine performance corresponding to the engine load and the energy speed becomes optimal.

### {Citation List}

### {Patent Literature}

PTL 1 JP 2011-27053
PTL 2 JP 2012047094 A
PTL 3 EP 2410151 A1

### {Summary of Invention}

### {Technical Problem}

In marine transportation, in order to reduce the fuel consumption, the main engine is not made to perform rated operation but is made to perform reduced-speed operation in which the speed is reduced, for cruising. As a result, the cost of fuel can be significantly reduced.

On the other hand, an exhaust-heat recovery system generally built into ships is designed such that the main- engine load is 90% in a high-load range, for example. A power turbine uses exhaust gas from a main engine as a driving source, and, when the main-engine load becomes about 50%, for example, the exhaust gas is introduced to the power turbine, thereby making it possible to operate the power turbine.

However, during cruising with reduced-speed operation, the main engine is operated with the main-engine load being set at 50% or lower. Therefore, the exhaust-gas temperature of exhaust gas discharged from the main engine is low, and thus the amount of steam evaporated at an exhaust gas economizer is also small. Therefore, during reduced-speed operation, in the exhaust-heat recovery system, the power turbine is not driven, and, in addition, the amount of power generated by driving the steam turbine is small, or it becomes impossible to operate the steam turbine, and thus no power is generated.

The present invention has been made in view of such circumstances, and an object thereof is to provide an exhaust-heat recovery system and an exhaust-heat recovery method that are capable of generating power by finding conditions for allowing the steam turbine and the gas turbine to be driven even when the main engine is operated in a low-load range and capable of recovering exhaust heat.

### {Solution to Problem}

In order to solve the above-described problems, the exhaust-heat recovery system and the exhaust-heat recovery method of the present invention employ the following solutions.

Specifically, according to a first aspect, the present invention provides an exhaust-heat recovery system including: an engine part; a gas turbine that is driven by exhaust gas discharged from the engine part; a heat exchange part that generates steam by performing heat exchange with exhaust gas discharged from the engine part; a steam turbine that is driven by the steam supplied from the heat exchange part; a first flow-rate control valve that adjusts the flow rate of the exhaust gas supplied from the engine part to the heat exchange part via the gas turbine; a second flow-rate control valve that adjusts the flow rate of the exhaust gas supplied from the engine part to the heat exchange part without passing through the gas turbine; and a control part that controls a degree-of-opening of the first flow-rate control valve and a degree-of-opening of the second flow-rate control valve, in which the control part adjusts the degree-of-opening of the second flow-rate control valve according to a scavenging pressure of the engine part and opens or closes the first flow-rate control valve.

According to this configuration, in a case in which the first flow-rate control valve is closed, and thus there is no exhaust gas to be supplied from the engine part to the heat exchange part via the gas turbine, the degree-of-opening of the second flow-rate control valve is adjusted, thereby supplying exhaust gas from the engine part to the heat exchange part without making it pass through the gas turbine. As a result, even when the gas turbine is not driven, it is possible to generate steam at the heat exchange part and to drive the steam turbine. Then, because the degree-of-opening of the second flow-rate control valve is adjusted according to the scavenging pressure of the engine part, the minimum allowable scavenging pressure of the engine part can also be ensured.

In the first aspect of the present invention, the control part may adjust the degree-of-opening of the second flow-rate control valve so as to increase the degree-of-opening thereof as the scavenging pressure of the engine part is increased when the first flow-rate control valve is closed and may adjust the degree-of-opening of the second flow-rate control valve so as to reduce the degree-of-opening thereof as the scavenging pressure of the engine part is reduced when first flow-rate control valve is closed.

In the first aspect of the present invention, the control part may close the first flow-rate control valve, in an engine load range in which a rotating speed of the gas turbine is lower than a rotating speed of the steam turbine, and may adjust the degree-of-opening of the second flow-rate control valve according to the scavenging pressure of the engine part.

In the first aspect of the present invention, the control part may close the second flow-rate control valve when the first flow-rate control valve is open.

In the first aspect of the present invention, the control part may open the first flow-rate control valve, in an engine load range in which the rotating speed of the gas turbine is higher than the rotating speed of the steam turbine, and may close the degree-of-opening of the second flow-rate control valve irrespective of the scavenging pressure of the engine part.

According to a second aspect, the present invention provides an exhaust-heat recovery method including: a step of driving an engine part; a step of driving a gas turbine by using exhaust gas discharged from the engine part; a step of generating steam at a heat exchange part by using exhaust gas discharged from the engine part; a step of driving a steam turbine by using the steam generated at the heat exchange part; a step of adjusting the flow rate of the exhaust gas supplied from the engine part to the heat exchange part via the gas turbine; and a step of adjusting the flow rate of the exhaust gas supplied from the engine part to the heat exchange part without passing through the gas turbine, in which the flow rate of the exhaust gas supplied from the engine part to the heat exchange part is adjusted according to the scavenging pressure of the engine part, without causing the exhaust gas to flow into the gas turbine.

### {Advantageous Effects of Invention}

According to the present invention, it is possible to generate power by finding conditions for allowing the steam turbine and the gas turbine to be driven even when the main engine is operated in a low-load range and to recover exhaust heat.

### {Brief Description of Drawings}

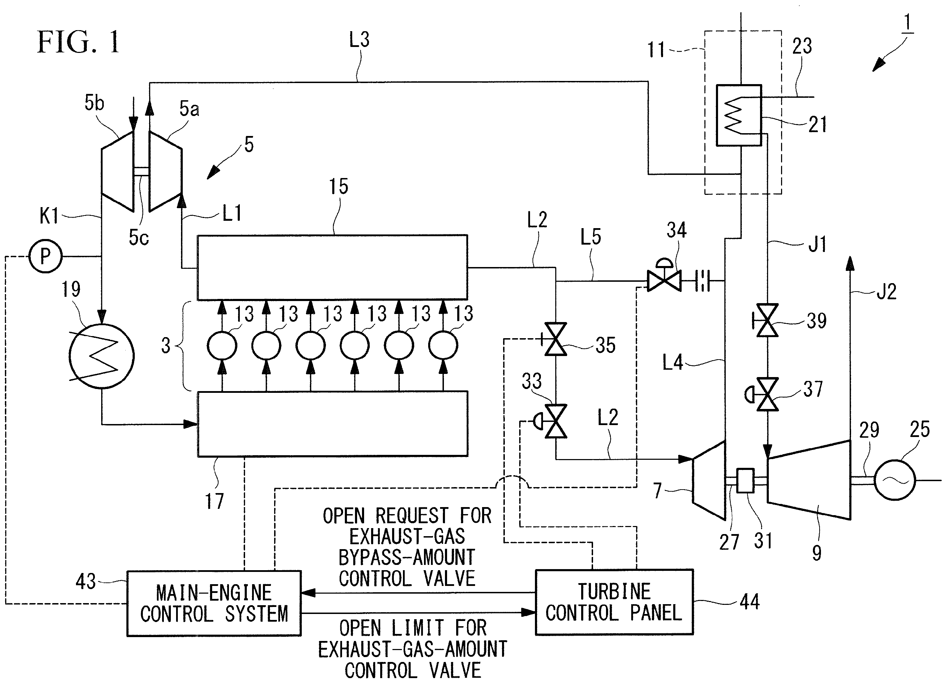

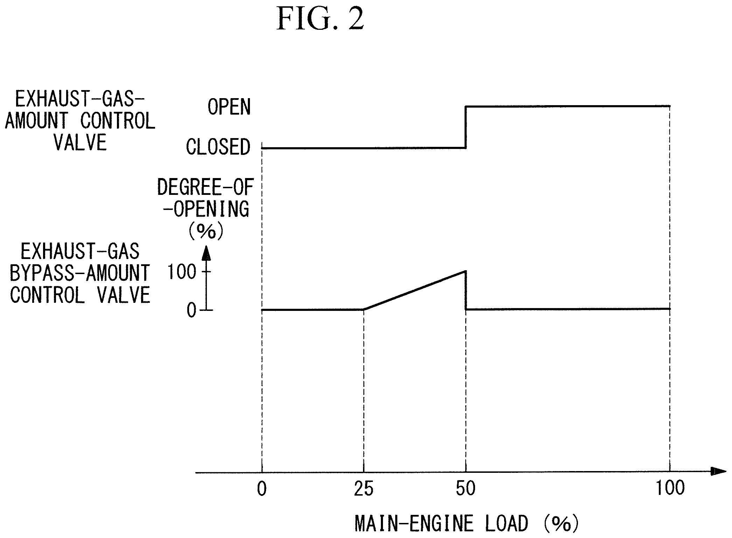

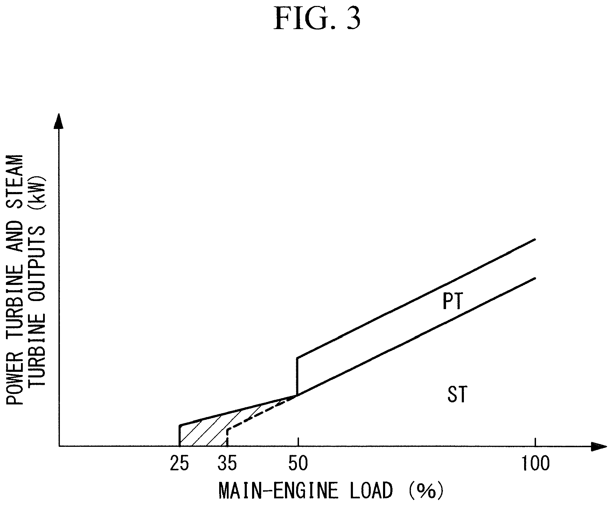

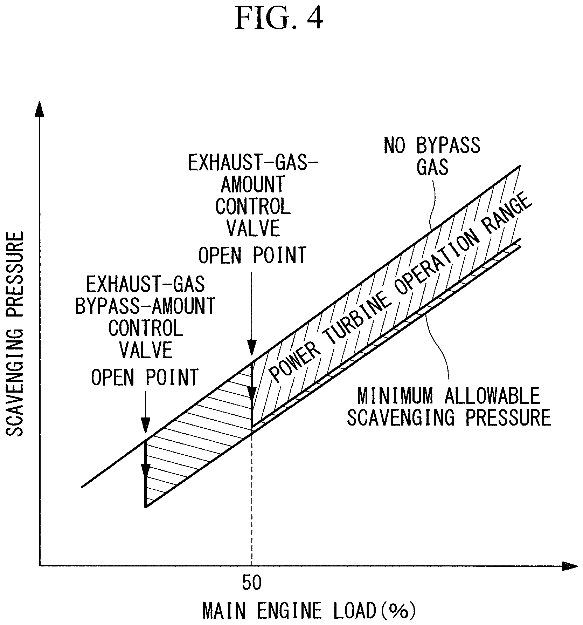

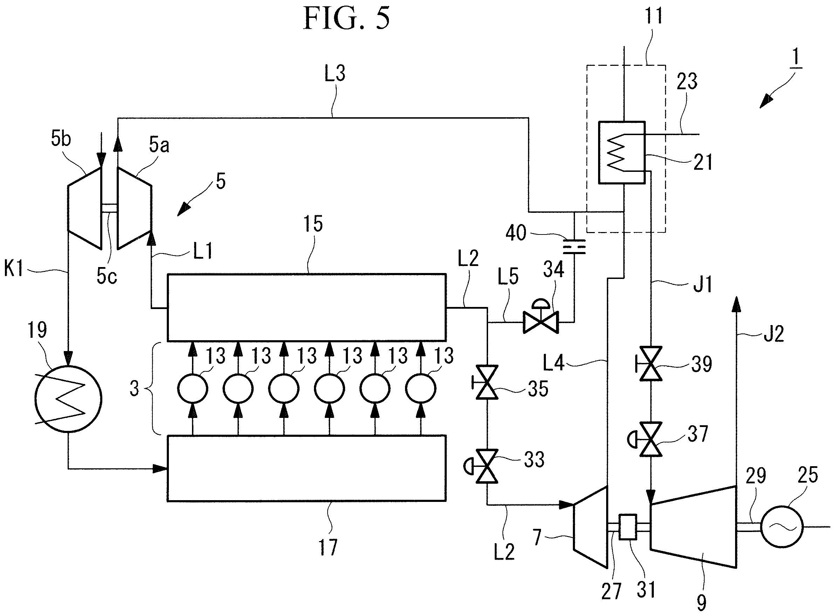

{Fig. 1} Fig. 1 is a view showing the configuration of an exhaust-heat recovery system according to one embodiment of the present invention.
{Fig. 2} Fig. 2 is a timing chart showing opening/closing of an exhaust-gas-amount control valve and an exhaust-gas bypass-amount control valve of the exhaust-heat recovery system according to the embodiment of the present invention.
{Fig. 3} Fig. 3 is a graph showing the relationship between the outputs of a power turbine and a steam turbine and a main-engine load, in the exhaust-heat recovery system according to the embodiment of the present invention.
{Fig. 4} Fig. 4 is a graph showing the relationship between the main-engine scavenging pressure and the main-engine load, in the exhaust-heat recovery system according to the embodiment of the present invention.
{Fig. 5} Fig. 5 is a view showing the configuration of an exhaust-heat recovery system according to the embodiment of the present invention.

### {Description of Embodiment}

An embodiment of the present invention will be described below with reference to the drawings.

Fig. 1 shows, in outline, the configuration of an exhaust-heat recovery system according to the embodiment of the present invention. In this embodiment, a ship-propulsion diesel engine 3 is used as a main engine.

An exhaust-heat recovery system 1 includes the ship-propulsion diesel engine (main engine) 3, an exhaust turbocharger 5 that is driven by exhaust gas from the diesel engine 3, a power turbine (gas turbine) 7 that is driven by exhaust gas from the diesel engine 3, the exhaust gas being extracted from an upstream side of the exhaust turbocharger 5, an exhaust gas economizer (exhaust gas boiler) 11 that generates steam from exhaust gas from the diesel engine 3, and a steam turbine 9 that is driven by the steam generated by the exhaust gas economizer 11.

The output from the diesel engine 3 is directly or indirectly connected to a screw propeller via a propeller shaft. Furthermore, exhaust ports of cylinder parts 13 of respective cylinders in the diesel engine 3 are connected to an exhaust manifold 15 serving as an exhaust-gas collecting pipe, and the exhaust manifold 15 is connected to an inlet side of a turbine part 5a of the exhaust turbocharger 5 via a first exhaust pipe L1. Furthermore, the exhaust manifold 15 is connected to an inlet side of the power turbine 7 via a second exhaust pipe L2 (extracted-gas pathway), so that part of the exhaust gas is extracted before being supplied to the exhaust turbocharger 5 and is supplied to the power turbine 7.

On the other hand, air-supply ports of the cylinder parts 13 are connected to an air-supply manifold 17, and the air-supply manifold 17 is connected to a compressor part 5b of the exhaust turbocharger 5 via an air-supply pipe K1. Furthermore, an air cooler (intercooler) 19 is provided on the air-supply pipe K1.

The exhaust turbocharger 5 is composed of the turbine part 5a, the compressor part 5b, and a rotary shaft 5c that couples the turbine part 5a with the compressor part 5b.

The power turbine 7 is rotationally driven by exhaust gas extracted from the exhaust manifold 15 via the second exhaust pipe L2. Furthermore, the steam turbine 9 is rotationally driven by being supplied with steam generated by the exhaust gas economizer 11.

Exhaust gas discharged from an outlet side of the turbine part 5a of the exhaust turbocharger 5 via a third exhaust pipe L3 and exhaust gas discharged from an outlet side of the power turbine 7 via a fourth exhaust pipe L4 are introduced to the exhaust gas economizer 11. A heat exchange part 21 in the exhaust gas economizer 11 generates steam by evaporating water supplied via a water supply pipe 23 using the heat of the exhaust gas. Then, steam generated at the exhaust gas economizer 11 is introduced to the steam turbine 9 via a first steam pipe J1, and steam that has been utilized at the steam turbine 9 is discharged via a second steam pipe J2 and is introduced to a condenser (not shown).

The power turbine 7 and the steam turbine 9 are coupled in series to drive a generator 25. A rotary shaft 29 of the steam turbine 9 is connected to the generator 25 via a reducer and a coupling (not shown). Furthermore, a rotary shaft 27 of the power turbine 7 is coupled with the rotary shaft 29 of the steam turbine 9 via a reducer (not shown) and a clutch 31. A clutch that connects or disconnects the shafts at a predetermined rotating speed is used as the clutch 31, and an SSS (Synchro-Self-Shifting) clutch is preferably used, for example. Note that, instead of coupling the power turbine 7 and the steam turbine 9 in series, the generator may be connected to each of the power turbine 7 and the steam turbine 9.

Furthermore, the second exhaust pipe L2 is provided with an exhaust-gas-amount control valve 33 that controls the amount of exhaust gas to be introduced to the power turbine 7 and an emergency-stop emergency shutoff valve 35 that shuts off the supply of exhaust gas to the power turbine 7 in the event of an emergency. Furthermore, an exhaust-gas bypass pipe L5 is provided by being branched off from the second exhaust pipe L2 and joins the fourth exhaust pipe L4. The exhaust-gas bypass pipe L5 is provided with an exhaust-gas bypass-amount control valve 34. Furthermore, a throttle mechanism, for example, an orifice 40, is provided at a downstream side of the exhaust-gas bypass-amount control valve 34 so as to control the flow rate of exhaust gas flowing in the exhaust-gas bypass pipe L5. The exhaust-gas bypass-amount control valve 34 is controlled such that the scavenging pressure of the diesel engine 3 is kept at a minimum allowable scavenging pressure. Here, the minimum allowable scavenging pressure is a minimum scavenging pressure that is set in advance according to the engine load and a scavenging pressure that is required for fuel combustion in the diesel engine 3. Specifically, while always monitoring the scavenging pressure of the diesel engine 3, the exhaust-gas bypass-amount control valve 34 is controlled so as to ensure the minimum allowable scavenging pressure, which is set in advance according to the engine load. The exhaust-gas bypass-amount control valve 34 is adjusted so as to be open during reduced-speed operation, thereby increasing the amount of exhaust gas to be discharged to the exhaust gas economizer 11 without passing through the power turbine 7. As a result, it is possible to increase the amount of steam evaporated at the exhaust gas economizer 11, thus accelerating start-up of the steam turbine 9 during low-load operation. Furthermore, it is possible to increase the amount of power generated at the generator 25 during the low-load operation.

Furthermore, the first steam pipe J1 is provided with a steam-amount control valve 37 that controls the amount of steam to be introduced to the steam turbine 9 and an emergency-stop emergency shutoff valve 39 that shuts off the supply of steam to the steam turbine 9 in the event of an emergency. The degree-of-opening of each of the above-described exhaust-gas-amount control valve 33, the exhaust-gas bypass-amount control valve 34, and the steam-amount control valve 37 is controlled by a control device 43.

As described above, the generator 25 is driven by using, as power, exhaust energy of exhaust gas (combustion gas) from the ship-propulsion diesel engine 3 and forms an exhaust energy recovery apparatus.

Next, adjustment of the exhaust-gas bypass amount and the operation of the power turbine 7 or the steam turbine 9 will be described with reference to Figs. 2 and 3.

In order to start up the power turbine 7, the rotating speed of the power turbine 7 needs to be increased up to the rotating speed of the steam turbine 9. Furthermore, the power turbine 7 needs to take the lowest load during operation. To start outputting power from the power turbine 7, a large amount of exhaust gas is required, and the load of the main engine needs to be somewhat high.

Therefore, in a state where the rotating speed of the power turbine 7 becomes equal to or higher than the rotating speed of the steam turbine 9, the exhaust-gas-amount control valve 33 is opened to supply exhaust gas to the power turbine 7, thereby making it possible to start outputting power from the power turbine 7.

For example, when an operation in which the main-engine load exceeds 50% is performed, and the rotating speed of the power turbine 7 is increased up to the rotating speed of the steam turbine 9, the power turbine 7 is started up. Note that, although a description will be given below of a case in which the main-engine load for starting up the power turbine 7 is 50%, the present invention is not limited to this example case and can be applied to a case in which such a main-engine load is lower than 50%, for example, 45%.

When the main-engine load is increased from a state in which it is lower than 50% to reach 50%, the exhaust-gas-amount control valve 33 is opened, thereby starting the operation of the power turbine 7. Then, as shown in Fig. 3, in order to maintain a constant output of the power turbine 7 irrespective of the increase in the main-engine load, the amount of exhaust gas that is to be supplied to the power turbine 7 is maintained constant, and the amount of exhaust gas that is not to be supplied to the power turbine 7 is sent to the turbine part 5a of the exhaust turbocharger 5. Here, the amount of exhaust gas that is to be supplied to the power turbine 7 may be set to a constant amount to make it easy to control or is adjusted at a predetermined flow rate using a turbine control panel 44 to make it optimal from the viewpoint of overall energy balance.

Note that, in order to achieve stable utilization of main-engine exhaust, when the main-engine load is equal to or higher than 50%, the exhaust-gas bypass-amount control valve 34 is kept closed.

When the main-engine load is equal to or higher than 50%, exhaust gas that is discharged from the outlet side of the turbine part 5a of the exhaust turbocharger 5 via the third exhaust pipe L3 and exhaust gas that is discharged from the outlet side of the power turbine 7 via the fourth exhaust pipe L4 are introduced to the exhaust gas economizer 11. Then, steam generated at the exhaust gas economizer 11 is introduced to the steam turbine 9 to drive the steam turbine 9.

On the other hand, when the main-engine load is decreased from a state in which it is high to become lower than 50%, an open limit for the exhaust-gas-amount control valve 33 is sent from a main-engine control system 43 to the turbine control panel 44, the exhaust-gas-amount control valve 33 is closed, and the supply of exhaust gas to the power turbine 7 is stopped. As a result, as shown in Fig. 3, the output of the power turbine 7 becomes 0 (zero). Furthermore, an open request for the exhaust-gas bypass-amount control valve 34 is sent from the turbine control panel 44 to the main-engine control system 43, and the exhaust-gas bypass-amount control valve 34 is opened.

Then, when the main-engine load is lower than 50%, the degree-of-opening of the exhaust-gas bypass-amount control valve 34 is adjusted by the main-engine control system 43 such that the scavenging pressure of the diesel engine 3 is kept at the minimum allowable scavenging pressure (see Fig. 4). Here, the main-engine control system 43 and the turbine control panel 44 are example control parts.

As a result, exhaust gas that is discharged from the outlet side of the turbine part 5a of the exhaust turbocharger 5 via the third exhaust pipe L3 and exhaust gas that is discharged via the exhaust-gas bypass pipe L5, on which the exhaust-gas bypass-amount control valve 34 is provided, are introduced to the exhaust gas economizer 11. Then, steam generated at the exhaust gas economizer 11 is introduced to the steam turbine 9 to drive the steam turbine 9.

Therefore, by opening the exhaust-gas bypass-amount control valve 34, the amount of steam evaporated at the exhaust gas economizer 11 is increased, thus making it possible to drive the steam turbine 9 during low-load operation.

For example, when the main-engine load is increased from a state in which it is lower than 25% to become equal to or higher than 25%, the main-engine control system 43 starts to open the exhaust-gas bypass-amount control valve 34 such that the scavenging pressure of the diesel engine 3 is kept at the minimum allowable scavenging pressure. Accordingly, it is possible to introduce exhaust gas to the exhaust gas economizer 11 while preventing the scavenging pressure of the diesel engine 3 from becoming lower than the minimum allowable scavenging pressure. As a result, it is possible to drive the steam turbine 9 to generate power even during low-load operation.

When the main-engine load is equal to or higher than 25% and is lower than 50%, while always monitoring the scavenging pressure of the diesel engine 3 during operation, the exhaust-gas bypass-amount control valve 34 is controlled so as to ensure the minimum allowable scavenging pressure, which is set in advance according to the main-engine load. Specifically, it is determined whether there is an allowance for the air pressure at the outlet of the compressor part 5b of the exhaust turbocharger 5. Then, the degree-of-opening of the exhaust-gas bypass-amount control valve 34 is adjusted according to the degree-of-allowance for the air pressure at the outlet of the compressor part 5b.

On the other hand, when the main-engine load is decreased from a state in which it is higher than 25% to become lower than 25%, the exhaust-gas bypass-amount control valve 34 is closed. As a result, the scavenging pressure of the diesel engine 3 is kept higher than the minimum allowable scavenging pressure.

In conventional technologies, when a valve provided on the exhaust-gas bypass pipe L5 is used during low-load operation, the degree-of-opening thereof is not adjusted, and just switching between opening and closing is performed. For example, in order to ensure the minimum allowable scavenging pressure at the diesel engine 3, the valve provided on the exhaust-gas bypass pipe L5 can be opened for the first time when the main-engine load becomes about 35%, for example.

On the other hand, in this embodiment, the degree-of-opening of the exhaust-gas bypass-amount control valve 34, which is provided on the exhaust-gas bypass pipe L5, can be adjusted. Then, the exhaust-gas bypass-amount control valve 34 is controlled such that the scavenging pressure of the diesel engine 3 is kept at the minimum allowable scavenging pressure. Therefore, even when the main-engine load is about 25%, for example, exhaust gas can be discharged to the exhaust gas economizer 11 via the exhaust-gas bypass pipe L5. As a result, it is possible to drive the steam turbine 9 when the main-engine load is lower than in conventional technologies. When the main-engine load is increased from zero or from a state in which it is close to zero, it is possible to accelerate start-up of the steam turbine 9 compared with conventional technologies and to increase the amount of power generated by the steam turbine 9 during low-load operation.

As described above, according to this embodiment, it is possible to introduce high-temperature exhaust gas extracted from the exhaust manifold 15 to the exhaust gas economizer 11, whereas it is impossible, with conventional technologies, to drive the steam turbine 9 to generate power in the generator 25 because the temperature of exhaust gas is low during reduced-speed sailing. Then, because the amount of exhaust gas extracted from the exhaust manifold 15 is controlled by the exhaust-gas bypass-amount control valve 34, the scavenging pressure of the diesel engine 3 can be kept higher than the minimum allowable scavenging pressure. Furthermore, because the amount of steam evaporated at the exhaust gas economizer 11 can be significantly increased during reduced-speed sailing compared with conventional technologies, the power generating capacity of the steam turbine 9 can be enhanced even during reduced-speed operation.

Furthermore, in this embodiment, when the main-engine load is equal to or higher than about 50%, for example, the exhaust-gas-amount control valve 33 is open, and the exhaust-gas bypass-amount control valve 34 is closed. Therefore, it is possible to achieve stable utilization of exhaust gas extracted from the diesel engine 3.

Note that, although a description has been given of the example case shown in Fig. 1 in which the exhaust-gas bypass pipe L5 is connected to the fourth exhaust pipe L4, the present invention is not limited to this example case. For example, as shown in Fig. 5, the exhaust-gas bypass pipe L5 may be connected to the third exhaust pipe L3, and exhaust gas that does not pass through the power turbine 7 may be supplied to the exhaust gas economizer 11 via the exhaust-gas bypass pipe L5 and the third exhaust pipe L3.

### {Reference Signs List}

1 exhaust-heat recovery system
3 diesel engine (engine part)
7 power turbine (gas turbine)
9 steam turbine
11 exhaust gas economizer (heat exchange part)
25 generator
33 exhaust-gas-amount control valve (first flow-rate control valve)
34 exhaust-gas bypass-amount control valve (second flow-rate control valve)
43 main-engine control system (control part)
44 turbine control panel (control part)

## Claims

1. An exhaust-heat recovery system (1) comprising:
an engine part (3);
a gas turbine (7) that is driven by exhaust gas discharged from the engine part (3);
a heat exchange part (21) that generates steam by performing heat exchange with exhaust gas discharged from the engine part (3);
a steam turbine (9) that is driven by the steam supplied from the heat exchange part (21);
a first flow-rate control valve (33) that adjusts the flow rate of the exhaust gas supplied from the engine part (3) to the heat exchange part (21) via the gas turbine (7);
a second flow-rate control valve (34) that adjusts the flow rate of the exhaust gas supplied from the engine part (3) to the heat exchange part (21) without passing through the gas turbine (7);
and
a control part (43, 44) that controls a degree-of-opening of the first flow-rate control valve (33) and a degree-of-opening of the second flow-rate control valve (34),
wherein the control part is configured to adjust the degree-of-opening of the second flow-rate control valve so as to ensure a minimum allowable scavenging pressure of the engine part (3) according to a scavenging pressure of the engine part (3) when the first flow-rate control valve (33) is closed.

2. An exhaust-heat recovery system according to claim 1, wherein the control part (43, 44) is configured to adjust the degree-of-opening of the second flow-rate control valve (34) so as to increase the degree- of-opening thereof as the scavenging pressure of the engine part (3) is increased when the first flow-rate control valve (33) is closed and is configured to adjust the degree-of-opening of the second flow- rate control valve (34) so as to reduce the degree-of-opening thereof as the scavenging pressure of the engine part (3) is reduced when the first flow-rate control valve (33) is closed.

3. An exhaust-heat recovery system according to claim 1 or 2, wherein the control part is configured to close the first flow-rate control valve (33), in an engine load range in which a rotating speed of the gas turbine (7) is lower than a rotating speed of the steam turbine (9), and is configured to adjust the degree-of-opening of the second flow- rate control valve (34) according to the scavenging pressure of the engine part (3).

4. An exhaust-heat recovery system according to one of claims 1 to 3, wherein the control part (43, 44) is configured to close the second flow-rate control valve (34) when the first flow-rate control valve (33) is open.

5. An exhaust-heat recovery system according to one of claims 1 to 4, wherein the control part (43, 44) is configured to open the first flow- rate control valve (33), in an engine load range in which the rotating speed of the gas turbine (7) is higher than the rotating speed of the steam turbine (9), and is configured to close the degree-of-opening of the second flow-rate control valve (34) irrespective of the scavenging pressure of the engine part (3).

6. An exhaust-heat recovery method comprising:
a step of driving an engine part (3);
a step of driving a gas turbine (7) by using exhaust gas discharged from the engine part (3);
a step of generating steam at a heat exchange part (11) by using exhaust gas discharged from the engine part (3);
a step of driving a steam turbine (9) by using the steam generated at the heat exchange part (11);
a step of adjusting the flow rate of the exhaust gas supplied from the engine part (3) to the heat exchange part via the gas turbine (7); and
a step of adjusting the flow rate of the exhaust gas supplied from the engine part (3) to the heat exchange part without passing through the gas turbine (7),
wherein the flow rate of the exhaust gas supplied from the engine part (3) to the heat exchange part (11) is adjusted so as to ensure a minimum allowable scavenging pressure of the engine part (3) according to the scavenging pressure of the engine part (3), without causing the exhaust gas to flow into the gas turbine (7).

## Patentansprüche

1. Abwärmerückgewinnungssystem (1), umfassend:
einen Motorteil (3);
eine Gasturbine (7), die durch Abgas angetrieben wird, das von dem Motorteil (3) ausgelassen wird;
einen Wärmetauscherteil (21), der Dampf generiert, indem dieser ein Wärmetauschen mit einem Abgas, das von dem Motorteil (3) abgelassen wird, durchführt;
eine Dampfturbine (9), die durch den Dampf angetrieben wird, der von dem Wärmetauscherteil (21) zugeführt wird;
ein erstes Flussratensteuerungsventil (33), das die Flussrate des Abgases steuert, das von dem Motorteil (3) zu dem Wärmetauscherteil (21) via der Gasturbine (7) zugeführt wird, anpasst;
ein zweites Flussratensteuerungsventil (34), das die Flussrate des Abgases, das von dem Motorteil (3) zu dem Wärmetauscherteil (21) zugeführt wird, ohne durch die Gasturbine (7) zu laufen, anpasst;
und
einen Steuerungsteil (43, 44), der einen Öffnungsgrad des ersten Flussratensteuerungsventils (33) und einen Öffnungsgrad des zweiten Flussratensteuerungsventils (34) steuert,
wobei der Steuerungsteil dazu ausgestaltet ist, den Öffnungsgrad des zweiten Flussratensteuerungsventils anzupassen, so dass ein minimaler erlaubter Spüldruck des Motorteils (3) entsprechend dem Spüldruck des Motorteils (3) sichergestellt wird, wenn das erste Flussratensteuerungsventil (33) geschlossen ist.

2. Abwärmerückgewinnungssystem nach Anspruch 1, wobei der Steuerungsteil (43, 44) dazu ausgestaltet ist, den Öffnungsgrad des zweiten Flussratenventils (34) anzupassen, sodass der Öffnungsgrad davon erhöht wird, wenn der Spüldruck des Motorteils (3) erhöht ist, wenn das erste Flussratenventil (33) geschlossen ist, und dazu ausgestaltet ist, den Öffnungsgrad des zweiten Flussratensteuerungsventils (34) anzupassen, sodass der Öffnungsgrad davon reduziert wird, während der Spüldruck des Motorteils (3) reduziert ist, wenn das erste Flussratensteuerungsventil (33) geschlossen ist.

3. Abwärmerückgewinnungssystem nach Anspruch 1 oder 2, wobei der Steuerungsteil dazu ausgestaltet ist, das erste Flussratensteuerungsventil (33) in einem Motorlastbereich zu schließen, in welchem die Umdrehungsgeschwindigkeit der Gasturbine (7) geringer als die Umdrehungsgeschwindigkeit der Dampfturbine (9) ist, und dazu ausgestaltet ist, den Öffnungsgrad des zweiten Flussratensteuerungsventils (34) entsprechend einem Spüldruck des Motorteils (3) anzupassen.

4. Abwärmerückgewinnungssystem nach einem der Ansprüche 1 bis 3, wobei der Steuerungsteil (43, 44) dazu ausgestaltet ist, das zweite Flussratensteuerungsventil (34) zu schließen, wenn das erste Flussratensteuerungsventil (33) offen ist.

5. Abwärmerückgewinnungssystem nach einem der Ansprüche 1 bis 4, wobei der Steuerungsteil (43, 44) dazu ausgestaltet ist, das erste Flussratensteuerungsventil (33) in einem Motorlastbereich zu öffnen, in welchem die Umdrehungsgeschwindigkeit der Gasturbine (7) höher als die Umdrehungsgeschwindigkeit der Dampfturbine (9) ist, und dazu ausgestaltet ist, den Öffnungsgrad des zweiten Flussratensteuerungsventils (34) zu schließen unabhängig von dem Spüldruck des Motorteils (3).

6. Abgasrückgewinnungsverfahren, umfassend:
einen Schritt des Antreibens eines Motorteils (3);
einen Schritt des Antreibens einer Gasturbine (7) durch Verwendung eines Abgases, das von dem Motorteil (3) ausgelassen wird;
einen Schritt des Generierens von Dampf an einem Wärmetauscherteil (11) unter Verwendung des Abgases, das von dem Motorteil (3) ausgelassen wird;
einen Schritt des Antreibens einer Dampfturbine (9) unter Verwendung des Dampfs, der durch den Wärmetauscherteil (11) generiert wird;
einen Schritt des Anpassens der Flussrate des Abgases, das von dem Motorteil (3) zu dem Wärmetauscherteil via der Gasturbine (7) zugeführt wird; und
einen Schritt des Anpassens der Flussrate des Abgases, das von dem Motorteil (3) zu dem Wärmetauscherteil ohne die Gasturbine (7) zu durchlaufen zugeführt wird,
wobei die Flussrate des Abgases, das von dem Motorteil (3) zu dem Wärmetauscherteil (11) zugeführt wird, so angepasst wird, dass ein minimaler erlaubter Spüldruck des Motorteils (3) entsprechend dem Spüldruck des Motorteils (3) sichergestellt ist, ohne zu verursachen, dass Abgas in die Gasturbine (7) fließt.

## Revendications

1. Système de récupération de chaleur d'échappement (1) comprenant :
une partie de moteur (3) ;
une turbine à gaz (7) qui est entraînée par du gaz d'échappement évacué de la partie de moteur (3) ;
une partie d'échange de chaleur (21) qui génère de la vapeur par la réalisation d'échange de chaleur avec du gaz d'échappement évacué de la partie de moteur (3) ;
une turbine à vapeur (9) qui est entraînée par la vapeur fournie depuis la partie d'échange de chaleur (21) ;
une première soupape de commande de débit (33) qui ajuste le débit du gaz d'échappement fourni depuis la partie de moteur (3) à la partie d'échange de chaleur (21) via la turbine de gaz (7) ;
une deuxième soupape de commande de débit (34) qui ajuste le débit du gaz d'échappement fourni de la partie de moteur (3) à la partie d'échange de chaleur (21) sans passer par la turbine de gaz (7) ;
et
une partie de commande (43, 44) qui commande un degré d'ouverture de la première soupape de commande de débit (33) et un degré d'ouverture de la deuxième soupape de commande de débit (34),
dans lequel la partie de commande est configurée pour ajuster le degré d'ouverture de la deuxième soupape de commande de débit de façon à garantir une pression de balayage minimum admissible de la partie de moteur (3) en fonction d'une pression de balayage de la partie de moteur (3) lorsque la première soupape de commande de débit (33) est fermée.

2. Système de récupération de chaleur d'échappement selon la revendication 1, dans lequel la partie de commande (43, 44) est configurée pour ajuster le degré d'ouverture de la deuxième soupape de commande de débit (34) de façon à augmenter le degré d'ouverture de celle-ci lorsque la pression de balayage de la partie de moteur (3) est augmentée lorsque la première soupape de commande de débit (33) est fermée et est configurée pour ajuster le degré d'ouverture de la deuxième soupape de commande de débit (34) de façon à réduire le degré d'ouverture de celle-ci lorsque la pression de balayage de la partie de moteur (3) est réduite lorsque la première soupape de commande de débit (33) est fermée.

3. Système de récupération de chaleur d'échappement selon la revendication 1 ou 2, dans lequel la partie de commande est configurée pour fermer la première soupape de commande de débit (33), dans une plage de charge de moteur dans laquelle une vitesse de rotation de la turbine à gaz (7) est inférieure à une vitesse de rotation de la turbine à vapeur (9), et est configurée pour ajuster le degré d'ouverture de la deuxième soupape de commande de débit (34) en fonction de la pression de balayage de la partie de moteur (3).

4. Système de récupération de chaleur d'échappement selon l'une quelconque des revendications 1 à 3, dans lequel la partie de commande (43, 44) est configurée pour fermer la deuxième soupape de commande de débit (34) lorsque la première soupape de commande de débit (33) est ouverte.

5. Système de récupération de chaleur d'échappement selon l'une quelconque des revendications 1 à 4, dans lequel la partie de commande (43, 44) est configurée pour ouvrir la première soupape de commande de débit (33), dans une plage de charge de moteur dans laquelle la vitesse de rotation de la turbine à gaz (7) est supérieure à la vitesse de rotation de la turbine à vapeur (9), et est configurée pour fermer le degré d'ouverture de la deuxième soupape de commande de débit (34) quelle que soit la pression de balayage de la partie de moteur (3).

6. Procédé de récupération de chaleur d'échappement comprenant :
une étape d'entraînement d'une partie de moteur (3) ;
une étape d'entraînement d'une turbine à gaz (7) en utilisant du gaz d'échappement évacué de la partie de moteur (3) ;
une étape de génération de vapeur au niveau d'une partie d'échange de chaleur (11) en utilisant du gaz d'échappement évacué de la partie de moteur (3) ;
une étape d'entraînement d'une turbine à vapeur (9) en utilisant la vapeur générée au niveau de la partie d'échange de chaleur (11) ;
une étape d'ajustement du débit du gaz d'échappement fourni depuis la partie de moteur (3) à la partie d'échange de chaleur via la turbine de gaz (7) ; et
une étape d'ajustement du débit du gaz d'échappement fourni depuis la partie de moteur (3) à la partie d'échange de chaleur sans passer par la turbine de gaz (7) ;
dans lequel le débit du gaz d'échappement fourni depuis la partie de moteur (3) à la partie d'échange de chaleur (11) est ajusté de façon à garantir une pression de balayage minimum admissible de la partie de moteur (3) en fonction de la pression de balayage de la partie de moteur (3), sans amener le gaz d'échappement à s'écouler dans la turbine à gaz (7).
